# EUROPÄISCHE PATENTSCHRIFT

(11) **EP 1 993 768 B1**
(45) Veröffentlichungstag und Bekanntmachung des Hinweises auf die Patenterteilung: **21.04.2010**
(21) Anmeldenummer: 07711165.6
(22) Anmeldetag: 06.02.2007
(51) Int. Cl.: B23C 5/22

(54) **SCHNEIDEINSATZ UND FRÄSWERKZEUG**
CUTTING INSERT AND MILLING TOOL
INSERT DE COUPE ET OUTIL DE FRAISAGE

(30) Priorität: 10.03.2006 DE 102006011581
(43) Veröffentlichungstag der Anmeldung: 26.11.2008
(73) Patentinhaber: Kennametal Widia Produktions GmbH & Co. KG, 45145 Essen (DE)
(72) Erfinder: SLADEK, Alfred, 90768 Fürth (DE); WESSEL, Andreas, 45888 Gelsenkirchen (DE); SCHWANER, Carsten, 45470 Mülheim a.d. Ruhr (DE); HAUSMANN, Martin, 40878 Ratingen (DE)
(74) Vertreter: Vomberg, Friedhelm
(86) Internationale Anmeldenummer: PCT/DE2007/000209
(87) Internationale Veröffentlichungsnummer: WO 2007/104275

(56) Entgegenhaltungen:
- WO-A-2005/065874
- DE-A1- 19 703 569
- DE-U1- 29 721 160

## Beschreibung

Die Erfindung betrifft einen Schneideinsatz, insbesondere für Fräsarbeiten, mit einem Grundkörper, der auf gegenüberliegenden Seiten jeweils umlaufende Schneidkanten aufweist, welche die jeweils angrenzenden unter einem positiven Spanwinkel abfallenden Spanflächenbereiche überragen, inmitten der eine oder mehrere ebene Auflageflächen angeordnet sind, und mit einem zentralen Befestigungsloch zur Aufnahme einer Spannschraube. Ein Schneideinsatz gemäß dem Oberbegriff von Anspruch 1 ist aus der WO 2005/065874 bekannt.

Die Erfindung betrifft ferner ein Fräswerkzeug, insbesondere ein Planfräswerkzeug, mit einem Werkzeughalter, der mehrere Ausnehmungen mit jeweils einer Auflagefläche und mit seitlichen Anlageflächen aufweist.

Bereits die US-A-4,189,264 beschreibt ein Schneidwerkzeug mit einem Werkzeughalter, in dessen Ausnehmung mit einer Auflagefläche und mit seitlichen Anlageflächen eine Unterlegplatte und eine Wendeschneidplatte angeordnet sind, die auf beiden Spanflächen einen abgesenkten Mittelbereich aufweist, dem gegenüber die ihn umgebenden an die Schneidkante angrenzenden Spanflächenbereiche in der Höhe hervortreten. Der genannten ebenen abgesenkten Mittelbereichsfläche kann die Auflagefläche eines plattenförmigen Spanbrechers angepasst sein, der endseitig eines bis über die Wendeschneidplatte ragenden, am Werkzeughalter befestigten Armes angeordnet ist. Die gewählte deichförmige Ausgestaltung der an die Schneidkante angrenzenden Spanflächenbereiche hat den Nachteil, dass die Anforderungen nach einem weichen Spanablauf, einer sicheren Spankontrolle und einer stabilen Schneidkante und Schneidecke nur in eingeschränktem Maße erfüllt werden können. Die Unterlegplatte besitzt umlaufende randseitige Ausnehmungen, deren Tiefe größer als der Abstand des ebenen Mittelbereiches von der Schneidkantenebene ist, so dass im gespannten Zustand der erhabene Mittelbereich der Unterlegplatte als Auflagefläche für den gegenüberliegenden Mittelbereich der Wendeschneidplatte dient. Die Unterlegplatte sowie die Wendeschneidplatte sind mit jeweiligen zentralen Durchgangsbohrungen versehen, durch die eine Spannschraube durchführbar ist.

Vorderseitig schließen die Unterlegplatte und die Wendeschneidplatte bündig miteinander ab.

Die WO 94/15741 A1 beschreibt ein Schneidwerkzeug mit einem Plattensitz in einem Werkzeughalter, in den eine Wendeschneidplatte einsetzbar ist. Die Wendeschneidplatte besitzt auf den jeweiligen gegenüberliegenden Spanflächen parallel zur Schneidkante verlaufende Spanformnuten oder Fasen unter einem positiven Spanwinkel. Zum Schutz der jeweils nicht aktiven Schneidkanten weist die Wendeschneidplatte im Bereich einer jeden Ecke eine muldenförmige Ausnehmung auf, die mit erhabenen Vorsprüngen auf der Unterseite der Unterlegplatte korrespondiert. Die Vorsprünge und die muldenförmigen Ausnehmungen sollen im Spannzustand der auf der Unterlegplatte festgeklemmten Wendeschneidplatte aneinander liegen und als Abstützung dienen, durch welche die nicht aktiven Schneidkanten im Abstand zu der Unterlegplatte gehalten werden. Der Nachteil dieser Ausbildung liegt darin, dass eine hohe Passgenauigkeit der betreffenden Vorsprünge auf der Oberseite der Unterlegplatte in Bezug auf die entsprechenden muldenförmigen Ausnehmungen gefordert ist, da ansonsten die Wendeschneidplatte nicht auf das gewünschte Normmaß eingespannt werden kann. Besondere Schwierigkeiten ergeben sich mit polygonalen Wendeschneidplatten mit mehr als drei Ecken, da dann bei etwaigen Maßungenauigkeiten kein eindeutig definierbarer Sitz der Wendeschneidplatte auf der Unterlegplatte gegeben ist.

In der DE 196 53 921 A1 wird daher die Aufgabe gestellt, einen sicheren stabilen wiederholt reproduzierbaren Schneidplattensitz im Werkzeughalter, gegebenenfalls mit einer langlebigen wiederholt verwendbaren Unterlegplatte, zu schaffen, wobei die Werkzeugeinheit vor einer Verschmutzung des Klemmsystems sicher geschützt sein soll. Vorzugsweise sollen die verwendeten Schneideinsätze als doppelseitig nutzbare Wendeschneidplatten ausgebildet sein. Zur Lösung dieser Aufgabe wird vorgeschlagen, dass die Auflagefläche im Werkzeughalter selbst oder in Form der Unterlegplattenoberfläche eine durchgehend geschlossene erhabene Fläche zur Bildung eines ebenen Auflagebereiches bildet, der in radialer Richtung im Abstand von der durch die Freiflächenebene der Wendeschneidplatte definierten Ebene endet. Das Abstandsmaß des Auflagebereiches soll bis auf ein Toleranzmaß größer oder gleich dem jeweiligen radialen Abstand des Plateaubereiches von der Schneidkante sein. Durch die geschlossene Auflageflächen-Ausbildung soll ein Vorteil gegenüber einzelnen Erhebungen und/oder Mulden im Hinblick auf die Fertigungsgenauigkeit erzielt werden. Das notwendige Schleifen der Auflageflächen erfordert jedoch einen weiteren Arbeitsgang nach dem Sintern, der die Herstellungskosten des Schneideinsatzes und damit die Wirtschaftlichkeit des Zerspanungsprozesses negativ beeinflusst. Ein Verzicht auf das Planschleifen der Anlage- bzw. Auflageflächen ist prinzipiell möglich, jedoch müssen dann Ungenauigkeiten in den Flächen, die in Folge des Sinterprozesses entstanden sind, in Kauf genommen werden. Die Auflageflächen werden unebener, so dass sich der Halt der als Wendeschneidplatten ausgebildeten Schneideinsätze im Halter verschlechtert.

Um die Wirtschaftlichkeit der Zerspanungsprozesse, bei denen Schneideinsätze eingesetzt werden, zu verbessern, d. h. um die Kosten pro hergestelltem Werkstück zu minimieren, sollten auch die Herstellkosten der verwendeten Schneideinsätze möglichst gering sein. Beim Einsatz von Wendeschneidplatten zum Fräsen ist deshalb darauf zu achten, dass die Verwendbarkeit pro Schneideinsatz so groß wie möglich ist. Gleichzeitig soll die Zerspanungsleistung optimiert werden, d. h. dass der Schneideinsatz hinsichtlich der Schneidkante und gegebenenfalls der Spanformgeometrie so gestaltet werden muss, dass ein weicher Spanablauf mit maximaler Vorschubgeschwindigkeit gewährleistet werden kann. Mittels nach dem Stand der Technik bekannter doppelseitiger, polygonaler Wendeschneidplatten kann pro Wendeschneidplatte eine große Anzahl von wirksamen Schneidkanten bereitgestellt werden. So haben beispielsweise doppelseitige 6-eckige Wendeschneidplatten insgesamt 12 wirksame Schneidkanten.

Zur Erzeugung eines möglichst weichen Schnittes sind positive Spanwinkel vorteilhaft. Bei doppelseitigen Wendeschneidplatten führt dies zu einer Überhöhung der Schneidkante über die Spanflächen hinaus. Um die Wendeschneidplatte im Werkzeughalter positionieren zu können, muss der Halter im Bereich der Schneidkanten freigelegt sein und die Wendeschneidplatte eine ausreichende möglichst plane Auflagefläche aufweisen, da es anderenfalls zu einem fehlenden Halt des Schneideinsatzes im Werkzeug und zu punktuellen Überlastungen der Schneidkanten kommen kann, die schließlich ausbrechen, wodurch die Standzeit der Wendeschneidplatte vermindert wird. Abgesehen davon, dass die Verwendung von Unterlegplatten der vorbeschriebenen Art aufwendig ist, können solche Unterlegplatten die vorstehenden Nachteile nur bedingt beseitigen.

Ein weiteres doppelseitig verwendbares Schneidelement wird in der WO 2005/065874 A1 offenbart, das eine sich nach innen verjüngende beispielsweise konisch geformte Öffnung aufweist, die zum Aufliegen eines Schraubkopfes dient.

In der DE 297 21 160 U1 wird ein einseitig verwendbarer Schneideinsatz mit einem zentral angeordneten Befestigungsloch beschrieben.

Es ist Aufgabe der vorliegenden Erfindung, eine doppelseitige Wendeschneidplatte mit einer großen Anzahl von wirksamen Schneidkanten zu schaffen, die einen sicheren und stabilen Sitz des doppelseitig verwendbaren Schneideinsatzes im Werkzeughalter ohne die Verwendung einer Unterlegplatte gewährleistet, wobei dieser Schneideinsatz kostengünstig herstellbar sein soll.

Es ist ferner Aufgabe der vorliegenden Erfindung, ein Fräswerkzeug anzugeben, welches die vorstehenden Erfordernisse erfüllt.

Die Aufgabe wird zunächst durch den Schneideinsatz nach Anspruch 1 gelöst. Dieser Schneideinsatz besitzt erfindungsgemäß um das zentrale Befestigungsloch mindestens eine in die ebene Auflagefläche übergehende Kegelfläche mit einem nach innen, d. h. zum Befestigungsloch hin abfallenden Kegel, wobei der Kegelwinkel 0,1°≤ a ≤ 2°, vorzugsweise 0,3° bis 0,35° beträgt. Der Vorteil dieses Schneideinsatzes liegt darin, dass durch den genannten kegelförmig ausgestalteten Bereich Sinterungenauigkeiten des Schneideinsatzes beim Anziehen der Befestigungsschraube ausgeglichen werden, so dass der doppelseitig ausgebildete Schneideinsatz sicher und stabil im Werkzeughalter aufliegt.

Weitere vorteilhafte Ausführungsformen werden in den Unteransprüchen beschrieben.

Der Kegelwinkel, worunter der Winkel zu verstehen ist, den die Kegelfläche mit auf gegenüberliegenden Seiten des Schneideinsatzes parallel zueinander liegenden Auflageflächen bildet, wird relativ klein gewählt, wobei bevorzugte Werte zwischen 0,1° und 2°, insbesondere zwischen 0,3° bis 0,35° liegen. In praktischen Versuchen hat sich herausgestellt, dass durch diese Bemessungen bestehende Sinterungenauigkeiten beim Anziehen der Befestigungsschraube ausgleichbar sind.

Nach einer weiteren Ausgestaltung ist die Kegelfläche ringförmig oder mehrteilig in Form von teilringförmigen Kegelflächen ausgebildet, die vorzugsweise durch eine nutförmige Absenkung voneinander getrennt sind. Nach einer weiteren Ausgestaltung der Erfindung sind die nutförmigen Absenkungen sternförmig (in Bezug auf das mittlere Befestigungsloch) angeordnet, vorzugsweise in äquidistantem Winkelabstand.

Nach einer weiteren Ausführungsform der Erfindung sind neben den (geringfügig geneigten) Kegelflächen noch zusätzlich ebene Auflageflächen angeordnet, und zwar zwischen den unter einem positiven Spanwinkel abfallenden Spanflächen und den Kegelflächen oder der einen ringförmigen Kegelfläche. Die Auflageflächen auf gegenüberliegenden Seiten sind parallel zueinander angeordnet. Vorzugsweise sind mehrere nebeneinander liegende Anlageflächen durch eine nutförmige Absenkung voneinander getrennt. Die Auflageflächen werden bei einer n-eckigen Wendeschneidplatte an der inneren Seite durch ein Teilkreisstück und an der äußeren Seite durch ein lineares Teilstück begrenzt. Auflageflächen sind im Vergleich zu den Kegelflächen vorzugsweise kleiner ausgebildet.

Zwischen den genannten Auflageflächen und den abfallenden Spanflächen ist nach einer Weiterbildung der Erfindung eine nutförmige Absenkung vorgesehen. Durch die positive Ausrichtung der Spanablauffläche im Anschluss an die Schneidkante in Verbindung mit der Nut wird erreicht, dass der ablaufende Span - eine genügend lange Spanablauffläche vorausgesetzt - nicht mit der Auflagefläche in Kontakt kommt, so dass dortige Ablagerungen, die nach dem Wenden des Schneideinsatzes zu Einspannungenauigkeiten führen können, wirkungsvoll vermieden werden.

Vorzugsweise ist der Schneideinsatz im Hinblick auf eine mittlere Querschnittsebene, die das zentrale Befestigungsloch schneidet, spiegelsymmetrisch ausgebildet, so dass nach dem Wenden identische Auflagen und Kegelflächen an denselben Stellen vorliegen.

Der erfindungsgemäße Schneideinsatz wird insbesondere mehreckig ausgeführt, beispielsweise in einer Draufsicht betrachtet 6-eckig und vorzugsweise rotationssymmetrisch. Der Schneideinsatz besitzt somit sechs Schneidecken und sechs gleich lange Schneidkanten, von denen jeweils zwei eine Schneidecke bilden.

Wie im Prinzip nach dem Stand der Technik bekannt, ist rings um das Befestigungsloch eine Ansenkung zur Zentrierung einer Senkschraube bei deren Befestigung angeordnet.

Die nutförmigen Absenkungen sind so ausgebildet, dass sie vorzugsweise einen ebenen Nutgrund und/oder mindestens eine abfallende Flanke auf jeder Seite aufweisen. Unter abfallender Flanke wird eine Nutseitenwand verstanden, die mit dem Nutgrund einen Winkel bildet, der größer als 90° ist. Im Übergangsbereich dieser unteren abfallenden Flanke und den jeweiligen Auflage- oder Kegelflächen bzw. Spanablaufflanken kann der Nuteingang auch abgerundet ausgebildet sein.

Die vorstehende Aufgabe wird ferner durch das Fräswerkzeug nach Anspruch 11 gelöst. Dieses Fräswerkzeug besitzt einen Werkzeughalter, der mehrere Ausnehmungen mit jeweils einer Auflagefläche und mit seitlichen Anlageflächen besitzt, wobei in jeder Ausnehmung ein Schneideinsatz nach der vorbeschriebenen Art eingebaut ist. Die Schneideinsätze können unmittelbar oder mittelbar über Kassetten in den Ausnehmungen befestigt sein.

Weitere Vorteile ergeben sich aus den Zeichnungen sowie den nachstehenden Zeichnungserläuterungen. Es zeigen:
- Fig. 1: eine Draufsicht auf einen erfindungsgemäßen Schneideinsatz,
- Fig. 2: eine Seitenansicht des Schneideinsatzes nach Fig. 1,
- Fig. 3: eine perspektivische Ansicht des Schneideinsatzes nach Fig. 1 und 2 und
- Fig. 4: eine Ausschnittsvergrößerung des Teils B in Fig. 3.
- Fig. 5: eine Draufsicht auf einen Planfräser mit sieben Schneideinsätzen,
- Fig. 6: eine Seitenansicht des Planfräserkopfes gemäß Fig. 5 und
- Fig. 7: eine Schnittansicht des Planfräsers nach Fig. 5 und 6.

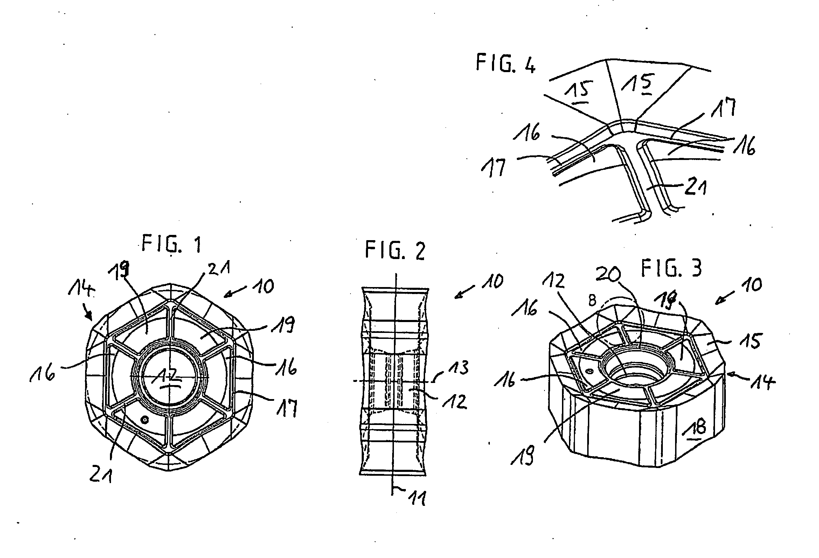

Der in Fig. 1 bis 3 dargestellte Schneideinsatz 10 ist spiegelsymmetrisch zu einer in Fig. 2 angedeuteten Längsmittelebene 11, welche das Befestigungsloch 12, das den Schneideinsatz 10 durchdringt, quer schneidet. Darüber hinaus und wie Fig. 1 und 3 zu entnehmen, ist der Schneideinsatz 10 auch um eine Bohrlochmittelachse 13 rotationssymmetrisch aufgebaut, im vorliegenden Fall dergestalt, dass bei einer Drehung um 60° um diese Achse 13 Deckungsgleichheit vorliegt. Der Schneideinsatz besitzt sechs Schneidkanten, von denen jeweils zwei benachbarte Schneidkanten eine Schneidecke bilden. Im vorliegenden Fall sind die Schneidecken 14 nicht rund, sondern polygonartig ausgebildet, d. h. durch jeweils gradlinige Kantenbereiche. Im Anschluss an jede Schneidkante sowie jede Schneidecke grenzen unter einem positiven Spanwinkel abfallende Spanflächenbereiche 15 an, die vorzugsweise unter demselben einheitlichen positiven Spanwinkel angeordnet sind und einheitlich mit einem Bezugszeichen unabhängig von ihrer Lage und Form mit 15 bezeichnet werden. Der Schneideinsatz besitzt ebene Auflageflächen 16, die von den abfallenden Spanflächenbereichen 15 durch eine nutförmige Absenkung 17 getrennt werden. Diese nutförmige Absenkung 17 besitzt einen ebenen Nutgrund sowie Nutwände, die sich beidseitig schrägwinklig erheben. Gegebenenfalls kann die Nut auch mehrere Nutflanken aufweisen, die in einem Winkelmaß von weniger als 180° zueinander geneigt sind. Alternativ ist es selbstverständlich möglich, konvexe Übergangsbereiche zu den Flächen 15 und 16 bzw. konkave Übergangsbereiche zum Nutgrund zu schaffen.

Den ebenen Auflageflächen 16 gegenüberliegend befindet sich auf der anderen Seite eine entsprechende Anzahl von Flächen 16 gleicher Kontur, die parallel zu den beschriebenen Flächen 16 ausgerichtet sind. Inmitten der genannten ebenen Flächen 16, die jeweils vertikal zu jeder Seitenfläche 18 (siehe Fig. 3) stehen, liegen Kegelflächen 19, die teilringförmig ausgebildet sind und mit Ausnahme einer Anfasung 20 bis zum Befestigungsloch 12 reichen. Diese Kegelflächen sind unter einem Winkel von 0,32° gegenüber den Auflageflächen 16 mit einem nach innen, d. h. zum Befestigungsloch 12 abfallenden Kegel ausgerichtet. Zwischen den teilringförmigen Kegelflächen 19 ist jeweils eine nutförmige Absenkung 21 vorgesehen, die sich bis zu den abfallenden Spanflächenbereichen erstreckt, die an die Schneidkanten angrenzen. Wie insbesondere aus Fig. 4 ersichtlich, liegt der Nutengrund der nutförmigen Absenkung 21 mit dem Nutgrund der Absenkung 17 nicht nur in einer einzigen Ebene, sondern es gehen die Nuten auch ineinander über. Auch die Flanken der nutförmigen Absenkung 21 sind im unteren Bereich konkav und im oberen Bereich konvex ausgebildet. Der Nutengrund der nutförmigen Absenkungen 17 und 21 liegt in einer Ebene, und zwar sowohl auf der Oberseite als auch auf der Unterseite des Schneideinsatzes.

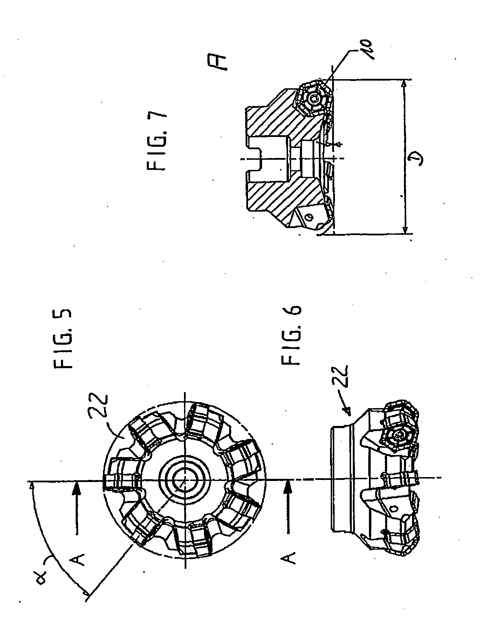

Schneideinsätze der in Fig. 1 bis 3 dargestellten Art können radial in einen Planfräswerkzeugkopf 22 eingespannt werden, wie dies in Fig. 5 bis 7 dargestellt ist. Hierzu besitzt der Planfräswerkzeugkopf einen Werkzeughalter mit mehreren Ausnehmungen, die jeweils eine Auflagefläche und seitliche Anlageflächen besitzen. Die seitlichen Anlageflächen des Werkzeugkopfes sind entsprechend den Seitenflächen 18 (Freiflächen) des Schneideinsatzes 10 ausgebildet. Die Anlageflächen des Messerkopfes enden in eingespanntem Zustand des Schneideinsatzes unterhalb der Schneidkante, so dass auch die sogenannten inaktiven Schneidkanten freiliegen. Der Schneideinsatz 10 wird mittels einer Befestigungsschraube montiert, die durch das Befestigungsloch 12 gesteckt und in einer Gewindebohrung des Werkzeugkopfes eingeschraubt wird. Die Auflagefläche des Werkzeughalters ist eben ausgebildet und ragt gegenüber den Bereichen des Werkzeugkopfes, die etwa in Höhe der Schneidkanten liegen, leicht hervor, so dass auch die dem Werkzeugkopf zugewandten (inaktiven) Schneidkanten frei liegen und somit vor einer Beschädigung geschützt sind. Durch das Anziehen der Spannschraube wird die der Auflagefläche des Werkzeughalters zugewandte Unterseite des Schneideinsatzes 10 allmählich auf die Auflagefläche bis zum Kontakt mit dieser zu bewegt. Durch die Maßnahme, dass die abgesenkten Flächen 19 und 16 nicht wie nach dem Stand der Technik üblich, in einer Ebene liegen, können aufgrund der aufzuwendenden Spannkräfte kleinere Unebenheiten dieser Flächen, die nach dem Sintern bestehen, ausgeglichen werden. Dies hat den Vorteil, dass der Schneideinsatz nach dem Sintern nicht mehr an den Flächen 16 und 19 plangeschliffen werden muss. Im vorliegenden Fall besitzt der Planfräswerkzeugkopf 22 Schneideinsätze 10, die umfangsseitig sowie an der Stirnseite leicht überkragen. Durch die Schneideinsätze 10, welche rotierend bewegt werden, ergibt sich ein Schnittdurchmesser D. Im vorliegenden Fall sind sieben Schneideinsätze vorgesehen, welche eine Winkelabstand α = 360°/7 zueinander besitzen. Prinzipiell sind jedoch auch andere Anordnungen möglich, bei denen die Winkelabstände benachbarter Schneideinsätze ungleich sind.

Beim Schneideinsatz werden aktiv jeweils zwei Schneidkanten (als Plan- und Hauptschneide) zerspanend eingesetzt, so dass durch Drehung der Schneideinsätze um 60° neue, zuvor inaktive Schneidkanten zum Einsatz gebracht werden können. Sind auf einer Spanflächenseite alle Schneidkanten verschlissen, wird der Schneideinsatz gewendet, d. h. um die Ebene 11 gedreht, so dass die Schneidkanten auf der anderen Seite aktiviert werden.

## Patentansprüche

1. Schneideinsatz, insbesondere für Fräsarbeiten, mit einem Grundkörper, der auf gegenüberliegenden Seiten jeweils umlaufende Schneidkanten aufweist, welche die jeweils angrenzenden, unter einem positiven Spanwinkel abfallenden Spanflächenbereiche (15) überragen, inmitten der eine oder mehrere ebene Auflageflächen angeordnet sind, und mit einem zentralen Befestigungsloch (12) zur Aufnahme einer Spannschraube, wobei um das zentrale Befestigungsloch (12) mindestens eine in die ebene Auflagefläche übergehende Kegelfläche (19) mit einem nach innen, d. h. zum Befestigungsloch (12) hin abfallenden Kegel angeordnet ist,
**dadurch gekennzeichnet, dass**
der Kegelwinkel (a) 0,1°≤ a ≤ 2°, vorzugsweise 0,3° bis 0,35° beträgt.

2. Schneideinsatz nach Anspruch 1, **dadurch gekennzeichnet, dass** die Kegelfläche ringförmig ist oder die Kegelflächen (19) teilringförmig und vorzugsweise durch eine nutförmige Absenkung (21) voneinander getrennt sind.

3. Schneideinsatz nach Anspruch 2, **dadurch gekennzeichnet, dass** die nutförmigen Absenkungen (21) sternförmig angeordnet sind, vorzugsweise in äquidistantem Winkelabstand.

4. Schneideinsatz nach einem der Ansprüche 1 bis 3, **dadurch gekennzeichnet, dass** zwischen den unter einem positiven Spanwinkel abfallenden Spanflächen (15) und der Kegelfläche oder den Kegelflächen (19) eine oder mehrere Auflageflächen (16) angeordnet sind, wobei bei mehreren Auflageflächen (16) benachbarte Auflageflächen vorzugsweise durch eine nutförmige Absenkung (21) voneinander getrennt sind.

5. Schneideinsatz nach einem der Ansprüche 1 bis 4, **dadurch gekennzeichnet, dass** zwischen den Auflageflächen (16) und den abfallenden Spanflächen (15) eine nutförmige Absenkung (17) vorgesehen ist.

6. Schneideinsatz nach einem der Ansprüche 1 bis 5, **dadurch gekennzeichnet, dass** die Ausgestaltung zu einer mittleren Querschnittsebene (11), welche das zentrale Befestigungsloch (12) schneidet, spiegelsymmetrisch ist.

7. Schneideinsatz nach einem der Ansprüche 1 bis 6, **dadurch gekennzeichnet, dass** der Schneideinsatz in einer Draufsicht betrachtet 6-eckig und vorzugsweise rotationssymmetrisch ist und dass um das Befestigungsloch (12) eine Ansenkung (20) zur Zentrierung einer Senkschraube bei deren Befestigung angeordnet ist.

8. Schneideinsatz nach einem der Ansprüche 1 bis 7, **dadurch gekennzeichnet, dass** die nutförmigen Absenkungen (17, 21) einen ebenen Nutgrund und/oder mindestens eine abfallende Flanke auf jeder Seite aufweisen.

9. Fräswerkzeug, insbesondere Planfräswerkzeug mit einem Werkzeughalter, der eine oder mehrere Ausnehmungen mit jeweils einer Auflagefläche und mit seitlichen Anlagenflächen aufweist,
**dadurch gekennzeichnet, dass**
in jeder Ausnehmung ein Schneideinsatz (10) nach einem der Ansprüche 1 bis 8 befestigt ist.

## Claims

1. Cutting insert, in particular for milling work, with a basic body which has on each of opposite sides peripheral cutting edges, which protrude beyond the respectively adjoining face regions (15), descending at a positive rake angle, in the middle of which one or more plane supporting surfaces (16) are arranged, and with a central mounting hole (12) for accommodating a clamping screw, whereby around the central mounting hole at least one conical surface (19) is provided, that tapers radially inward i. e. towards the mounting hole,
**characterised in that**
the value of the taper angle (a) is 0,1 ° ≤ a ≤ 2°, preferably 0,3 ° to 0,35 °.

2. Cutting insert according to claim 1, **characterised in that** the conical face is ring-shaped or **in that** the conical faces (19) form a subring and preferably are separated from one another by grooves (21).

3. Cutting insert according to claim 2, **characterised in that** the grooves (21) are provided in the shape of a star, preferably at an equal angular spacing form one another.

4. Cutting insert according to one of claims 1 to 3, **characterised in that** one ore more support surfaces (16) are provided between the rake faces (15), descending at a positive cutting angle and conical face or conical faces (19), whereby in the case of multiple support surfaces (16), adjacent support surfaces being preferably separated from one another by a groove (21).

5. Cutting insert according to one of claims 1 to 4, **characterised in that** a groove (17) is provided between the support surfaces (16) and the descending rake faces (15).

6. Cutting insert according to one of claims 1 to 5, **characterised in that** the configuration is mirror-symmetric relative to a central cross-sectional plane (11) cutting through the central mounting hole (12).

7. Cutting insert according to one of claims 1 to 6, **characterised in that** the cutting insert is hexagonal when viewed from the top and preferably rotationally symmetric and that a chamfer (20) is provided around the mounting hole (12) for centering a countersink screw during its mounting.

8. Cutting insert according to one of claims 1 to 7 **characterised in that** the groove-like depressions (17, 21) have a planar groove floor and/or at least one descending flank on each side.

9. Milling tool, in particular a face milling tool, having a tool holder that with one or more seats, each having one support surface and lateral contact surfaces, **characterised in that** a cutting insert (10) according to one of claims 1 to 8 is mounted in each seat.

## Revendications

1. Insert de coupe, en particulier pour des travaux de fraisage, comprenant un corps de base qui présente, sur chacun des côtés opposés, des tranchants périphériques qui dépassent les zones de face de coupe (15) respectivement adjacentes descendant à un angle positif de coupe, au beau milieu desquelles est disposée une ou une pluralité de surface(s) plane(s) d'appui, et comprenant un trou central de fixation (12) de réception d'une vis de serrage, autour dudit trou central de fixation (12) étant disposée au moins une surface conique (19) s'étendant jusque dans ladite surface plane d'appui et ayant un cône s'inclinant vers l'intérieur, c'est-à-dire vers ledit trou de fixation (12), **caractérisé par le fait que** l'angle de cône (a) est de 0,1 ° ≤ a ≤ 2 °, de préférence compris entre 0,3° et 0,35°.

2. Insert de coupe selon la revendication 1, **caractérisé par le fait que** ladite surface conique est annulaire ou que les surfaces coniques (19) sont en forme d'anneau partiel et sont séparées, de préférence, les unes des autres par un creux en forme de rainure (21).

3. Insert de coupe selon la revendication 2, **caractérisé par le fait que** lesdits creux en forme de rainure (21) sont disposés en étoile, de préférence à distance angulaire égale les uns des autres.

4. Insert de coupe selon l'une quelconque des revendications 1 à 3, **caractérisé par le fait qu'**une ou plusieurs surface(s) d'appui (16) est ou bien sont disposée(s) entre les faces de coupe (15) descendant à un angle positif de coupe et le ou les surface(s) conique(s) (19) ; dans le cas de plusieurs surfaces d'appui (16), les surfaces d'appui voisines étant séparées, de préférence, les unes des autres par un creux en forme de rainure (21).

5. Insert de coupe selon l'une quelconque des revendications 1 à 4, **caractérisé par le fait qu'**un creux en forme de rainure (17) est prévu entre les surfaces d'appui (16) et les faces de coupe descendantes (15).

6. Insert de coupe selon l'une quelconque des revendications 1 à 5, **caractérisé par le fait que** la configuration est à symétrie spéculaire par rapport à un plan médian de section transversale (11) qui coupe ledit trou central de fixation (12).

7. Insert de coupe selon l'une quelconque des revendications 1 à 6, **caractérisé par le fait que**, vu de dessus, l'insert de coupe est hexagonal et, de préférence, à symétrie de révolution, et qu'un chanfrein (20) est disposé autour du trou de fixation (12), qui est destiné à centrer une vis à tête conique lors de sa fixation.

8. Insert de coupe selon l'une quelconque des revendications 1 à 7, **caractérisé par le fait que** lesdits creux en forme de rainure (17, 21) présentent un fond plan de rainure et/ou, de chaque côté, au moins un flanc descendant.

9. Outil de fraisage, en particulier outil à fraiser les surfaces planes comprenant un porte-outil qui présente un ou plusieurs évidement(s) ayant chacun une surface d'appui et des surfaces latérales de contact, **caractérisé par le fait que** dans chacun des évidements est fixé un insert de coupe (10) selon l'une quelconque des revendications 1 à 8.
